(19) Europäisches Patentamt
European Patent Office
Office européen des brevets

(11) Publication number: **0 563 906 A1**

# (12) EUROPEAN PATENT APPLICATION

(21) Application number: **93105292.2**

(51) Int. Cl.5: **C08J 3/20**, C08K 5/10

(22) Date of filing: **30.03.93**

(30) Priority: **31.03.92 US 861140**

(43) Date of publication of application:
**06.10.93 Bulletin 93/40**

(84) Designated Contracting States:
**AT BE CH DE DK ES FR GB GR IE IT LI LU MC NL PT SE**

(71) Applicant: **UNION CARBIDE CHEMICALS & PLASTICS TECHNOLOGY CORPORATION**
**39 Old Ridgebury Road**
**Danbury, Connecticut 06817-0001(US)**

(72) Inventor: **Leung, Pak Sang**
**115 Woodland Road**
**Highland Mills, New York 10930(US)**

(74) Representative: **Weinhold, Peter, Dr. et al**
**Patentanwälte Dr. V. Schmied-Kowarzik**
**Dipl.-Ing. G. Dannenberg**
**Dr. P. Weinhold**
**Dr. D. Gudel**
**Dipl.-Ing. S. Schubert**
**Dr. P.**
**Barz**
**Siegfriedstrasse 8**
**D-80803 München (DE)**

## (54) Dispersions of polymer additives in fatty acid esters.

(57) Stable dispersions of polymer stabilizers in a normally liquid fatty acid ester of a polyhydric organic compound are provided. These dispersions can be advantageously employed to uniformly distribute the stabilizer throughout a polymer resulting in improved polymer properties.

EP 0 563 906 A1

## Field of the Invention

The present invention relates to dispersions of polymer additives in a continuous liquid phase. More particularly, the present invention relates to the distribution of a dispersion of solid additives throughout polymeric compositions, especially thermoplastic polymers.

## Background of the Invention

Stabilizers are commonly combined with polymers for various purposes including the prevention of thermal, oxidative and/or photo-degradation of the polymer during fabrication, processing, storage and end use. The effectiveness of the stabilizer in performing its intended purpose is a function of how uniformly mixed or dispersed the stabilizer is within the polymer. Areas containing low levels of stabilizer can degrade more rapidly than areas containing higher levels of the stabilizer. In many instances the stabilizers are solids which melt at high temperatures and are difficult to disperse throughout the polymer. This inability to disperse the stabilizer often reduces the overall performance of the polymer.

A number of procedures well known to the art have been used to incorporate stabilizers and other additives into polymer systems. For example, high shear mixing is frequently employed. To obtain acceptable dispersion, this method requires application of high shear forces for extended periods of time to raise the temperature of the polymer to form a molten material. Since many stabilizers have significantly higher melting temperatures than the polymer, the additives do not melt and are often distributed non-uniformly in the polymer. Exposure of the polymer to high temperatures during high shear mixing can result in polymer degradation.

Another method is melt extrusion by which the stabilizer is distributed in the polymer as it is being extruded through a die. While this method operates at lower temperatures and therefore does not cause polymer degradation to the same extent as high shear mixing, this technique does not adequately distribute small levels of stabilizers uniformly in the resin. Melt extrusion tends to be useful primarily for mixing large quantities of materials homogeneously.

Accordingly, a need exists to distribute stabilisers uniformly throughout a polymer without subjecting the polymer to conditions which might induce polymer degradation.

## Summary of the Invention

The present invention provides particular stable dispersions of polymer stabilizers. The dispersions comprise a normally liquid fatty acid ester of a polyhydric organic compound as the liquid or continuous phase. The discrete phase of the dispersion is a stabilizer. The present invention also provides a method for uniformly distributing polymer stabilizers throughout polymeric compositions, such as polyolefins.

## Detailed Description of the Invention

By the teachings of this present invention, stable dispersions of polymer stabilisers are provided using normally liquid fatty acid esters of polyhydric organic compounds as the liquid or continuous phase of the dispersion. The stable dispersions of the invention can be distributed uniformly in various polymers, and with particular advantage in thermoplastics, by blending the dispersion and polymer by a variety of mixing techniques known in the art including melt extrusion.

The liquid or continuous phase of the dispersions of this invention comprises a normally liquid, at ambient conditions, fatty acid ester of a polyhydric organic compound. The fatty acids from which the esters are derivable can be saturated or ethylenically unsaturated and usually have from 12 to 18 carbon atoms. The preferred class of polyhydric compounds, in turn, from which the fatty acid esters are derivable consist of carbon, hydrogen and oxygen and contain from three to six hydroxyl groups which can be the terminal hydroxyl groups of ethoxylated moieties. Oxygen can also be present as the cyclic ether group,

```
     |
   H-C\
     | O,
   H-C/
     |
```

in which event the polyhydric alcohol has no more than four hydroxyl groups. Oxygen can also be present in the polyhydric alcohol as acyclic ether linkages such as in the aforementioned hydroxyl-terminated ethoxylated or poly(oxyethylene) moieties. It is to be understood that the fatty acid ester can contain zero or from one to six hydroxyl-terminated poly(oxyethylene) chains. When the ester does contain such chains, i.e., $-(OC_2H_4)_n-OH$, the total average number (n) of oxyethylene units in the ester is a positive number, usually ranging from about 1 to about 100. The continuous phase of the dispersions of this invention may comprise any combination of the aforesaid types of fatty acid esters.

Most preferably the continuous phase of the dispersions contain fatty acid esters of sorbitan, glycerol or mixtures thereof. Illustrative of suitable sorbitan and glyceryl esters are sorbitan monooleate, sorbitan monolaurate, sorbitan trioleate, glyceryl trioleate, glyceryl monooleate, and the like. Various sorbitan esters, such as sorbitan monooleate and sorbitan monolaurate, are available commercially as Span 80 and Span 20 respectively from Imperial Chemical Industries Ltd. (ICI). Similarly, various glyceryl esters are commercially available from Witco Corporation. Poly(oxyethylene)-containing or ethoxylated derivatives of the sorbitan or glyceryl esters can also be used in the present invention. The latter materials are also commercially available from ICI, such as for example, Tween 20. Of the above ester compositions, especially preferred as the continuous phase of the dispersions of this invention are sorbitan monooleate, sorbitan monolaurate and glyceryl trioleate.

The continuous phase of the dispersion may also contain other liquids which are miscible in the fatty acid esters of the polyhydric organic compound. Preferably, the second liquid of the continuous phase also improves the properties of the polymer. Illustrative liquids include, but are not limited to, processing aids, liquid stabilizers and lubricants. Liquid stabilizers include organomodified silicones such as hindered amine silicones, including UVSIL® 299 (Enichem Co.). Especially preferred organomodified silicones are polyether silicone processing aids such as UCARSIL® PA-1 (Union Carbide Chemicals and Plastics Company Inc.)

The above-described fatty acid esters of polyhydric coumpounds are known to be useful as lubricants and surface active agents. Therefore, their use as the continuous phase of the dispersions of this invention allows for the elimination or reduction in the concentration of other additives for such purposes.

Improved performance of a polymer is noted as the stabilizers become more uniformly distributed within the polymer becomes more uniform. In particular, color and resistance to thermal degradation improve as stabilizers, such as antioxidants are more uniformly dispersed within the polymer. Illustrative of but not limited to then types of stabilizers which can be used in the present invention are ultraviolet light stabilizers, thermostabilizers, antioxidants, catalyst deactivators and acid neutralizers. Stabilizers are important additives because of their ability to modify overall polymer performance. Because of their high cost relative to the cost of most polymers, it is essential that stabilizers are uniformly distributed throughout the polymer to realize maximum benefit.

As used herein, the term "stabilizer" is meant to include all materials which can be added to polymer compositions for the purpose of improving or retaining the polymer's properties under various conditions of exposure and use. Although many stabilizers are solids, liquid stabilizers can also be employed in the present invention. The better the dispersion of the stabilizer in the polymer, the better the stabilizer efficiency. Stabilizers contain polar moieties and often are particularly troublesome to disperse into relatively non-polar polymer resins, particularly polyolefin resins. For example, the use of ETHANOX® 330, a relatively high molecular weight and high melting (244 °C) antioxidant, in polypropylene and nylon theoretically offers high performance, but has been excluded from many applications because of the difficulty in obtaining uniform additive-resin dispersions. For similar reasons, relatively polar zinc oxide, a low-cost acid scavenger, also is not used routinely for stabilizing polyolefins because it is difficult to disperse uniformly. More particularly, the present invention provides a solution to the problems associated with attempts to disperse polar additives into non-polar polymers.

Specific examples of the stabilizers component of the dispersions of this invention include: fatty amine, fatty amide antistatic agents and catalyst deactivators such as KEMAMINE® and KEMAMIDE® and

ATMER® 163 (Witco Chemical Co.); stabilizers including organic phosphites, and other organic phosphorus compounds, such as tri-n-dodecylphosphite, the bis-substituted pentaerythritol diphosphites such as bis(2,4-di-t-butylphenyl) pentaerythritol diphosphite, tris(mono-and di-nonylphenyl)phosphite IRGAFOS® 168 (Ciba - Geigy); phosphonites including fluorophosphonites such as ETHANOX® 398 (Ethyl Corp) and SANDOSTAB® P-EPQ (Sandoz); hindered phenols, such as octadecyl 3-(3',5'-di-t-butyl-4-hydroxyphenyl)-propionate, IONOL® (Shell), TOPANOL®CA (ICI); IRGANOX® antioxidants such as IRGANOX® 1076, 1093, 1098 and IRGANOX® 1010 (tetrakis[methylene-3(3'-5'-di-tert-butyl-4'hydroxyphenyl)propionate] methane) (Ciba-Geigy); and the ETHANOX® antioxidants such as ETHANOX® 330 (1,3,5-tri-methyl-2,4,6-tris-(3,5-di-tert-butyl-4-hydroxybenzyl) benzene) and ETHANOX® 702 (Ethyl Corp.); and ISONOX® 129 (2,2'-ethylidene-bis(4,6-di-t-butyl)phenol) (Schenectady Chemical); the CYANOX® antioxidants including CYANOX® 1790 (American Cyanamid); the GOOD-RITE® antioxidants including GOODRITE® 3114 (B.F. Goodrich Chemical Co.); antioxidants/metal deactivators, such as the NAUGARD® products such as NAUGARD® XL1 (Uniroyal Inc.) and IRGANOX® MD 1024 (Ciba-Geigy); thiodipropionate stabilisers such as dilauryl thiodipropionate; hindered amine compounds such as those containing tetra alkyl-piperidinyl functionality, including the light stabilizers and UV absorbers such as TINUVIN® 144, TINUVIN® 326 and 327, TINUVIN® P, TINUVIN® 622LD (Ciba-Geigy), CYANOX® 3346 (American Cyanamid), GOODRITE® 3044 (B.F. Goodrich Chemical Co.); benzophenone stabilizers, such as CYASORB®-UV 2098 (American Cyanamid), UVINUL®M 40 and UVINUL® 490 (BASF); blends of organic phosphorus compounds and hindered phenol antioxidants including IRGANOX® 1411, 1412, 501W, 712FF, B-225, B-215, and 900 (Ciba-Geigy); nucleating agents such as dibenzilydene sorbitol; acid neutralizers including metal oxides such as zinc oxide; hydrotalcites; metal stearates; calcium lactate and the like.

The concentration of the dispersion, i.e., the weight of the discrete phase (stabilizer) in the liquid phase, is usually about 0.1 to about 80 percent by weight, generally about 1 to about 60 percent by weight and usually about 10 to about 50 percent by weight.

The dispersions of this invention are prepared by admixing the stabilizer with the normally liquid fatty ester of a polyhydric organic compound by using a high shear mixer such as a COWLES® mixer. Also within the scope of this invention are mixtures of solid and liquid stabilizers as the discrete phase of the dispersion.

The process of the present invention can be used for dispersing the various polymer stabilizers in a wide variety of thermoplastic systems. The process can be advantageously employed with homopolymers, copolymers and polymer blends. Illustrative of, but not limited to the polymers include polyolefins, such as high density polyethylene, low density polyethylene (LDPE), linear low density polyethylene (LLDPE), polypropylene, polyesters, polyvinyl chloride, polyacrylates, polystyrene, styrene-butadiene copolymers, polyvinyl chloride/polyvinylacetate copolymers, ethylene/ acrylic acid copolymers, ethylene/acrylic acid/vinyl acetate terpolymers and the like.

Stabilizers which are used to formulate the dispersions of this invention generally have the following particle size distribution: at least about 95% by weight of the particles have a diameter of less than 150 microns and about 20 percent by weight have a particle size of less than about 20 microns. Preferably at least about 95% by weight of the particles have a diameter of less than 100 microns and at least 35% by weight have a particle size of less than 10 microns. Even more preferable are stabilizers having an average particle size of less than 20 microns and more than 50% by weight less than 10 microns.

Particularly desirable for purposes of this invention are stabilizers having the particle size described above which are comprised of a bimodal size distribution. A bimodal distribution has two separate peaks around which the particles are clustered. Especially advantageous are those bimodal distributions where the weight fraction of the larger particles, relative to the smaller particles, is from about 30 to about 90 percent of the total weight of the particles and the ratio of the average particle size of the larger particle size is at least two and preferably from about 2 to about 100. The dispersions having this particle size and weight distributions have been found to be not only extremely stable but also have a lower viscosity compared to dispersions only containing smaller particles.

While not wishing to be bound by any specific theory, it is believed that the stability of the dispersions of this invention is due to the occurrence of controlled agglomeration. Controlled agglomeration is believed to result in a structure which extends through the whole liquid volume and supports the individual particles, preventing the particles from settling. Consequently, there is no need to incorporate extraneous ingredients in the dispersion, such as surfactants and the like, whose sole purpose is to ensure the stability of the dispersion.

As used throughout this specification, which includes the claims, "stable dispersions" are those wherein there is less than about 5 percent by volume separation of the liquid phase, evidenced by the formation of a two-phase system, after centrifugation of the dispersions under a force of one-hundred times the force of

gravity (100G) for one hour. Particularly desirable are those dispersions which exhibit less than about 5 percent by volume separation after centrifugation under a force of 1400G for 4 hours. Dispersions which exhibit less than about 5 percent by volume separation after centrifugation under a force of 1400G for 4 hours are considered as stable, under ambient conditions, for at least 6 months. As used herein the phrase dispersion also encompasses suspensions and emulsions.

The dispersion containing the desired stabilizer in dispersed form is added directly to the thermoplastic resin which can be in either the form of solid particles (in pellet, granule, powder, etc., form) or in the molten state. In other words, the stable dispersions of the present invention can be pre-blended with polymer particles before polymer processing operations such as melt extrusion, injection molding and the like, or the dispersion can be added directly to a molten polymer during its processing. The compounding of the dispersion and thermoplastic resin may be done by spraying or by mixing or tumbling the resin and suspension in a ribbon blender, utilizing a two-roll mill, an extruder, including single screw and multiple screw extruders, a Banbury (Farrel Corp.) or Brabender mixer. Suitable procedures and equipment will readily occur to those skilled in the art of polymer processing. Concentrates or master batches of the dispersion and resin may be produced and blended with virgin resin such as on a mill before final processing. The rolls on a two-roll mill may operate at different speeds and temperatures. In spite of the simplicity of the milling operation, extrusion is usually preferred for blending the suspension and resin since an extruder can operate continuously, for example to produce strands that may be cut by a rotating knife to produce pellets.

The stable dispersion can be added to the synthetic resin at the end of the resin manufacturing process, such as directly after resin polymerization or polycondensation, for example while it is still molten or to powdered or pelleted polymer particles. However, it also is possible, and often more convenient, to admix the dispersion with the synthetic resin subsequently during one of its myriad processing stages, for example prior to or during extrusion. Using a fluid dispersion not only facilitates the mixing/dispersing of the additive with the polymer, but also makes it easier to control the amount of stabilizer mixed with the resin polymer. The dispersion can be mixed with polymer by high shear mixing, tumbling in a drum or directly metering through an extruder.

In any event, a homogeneous distribution of the stabilizer with the polymer is achieved without the danger of thermally degrading the polymer or additive and without agglomerating the stabilizer.

The advantage of having uniformly dispersed stabilizer is reflected in the aging characteristics of the finished product. When the additives are adequately dispersed, there are no localized areas starved of stabilizer which can fail due to polymer oxidation.

The amount of dispersion added to a thermoplastic resin will vary and depend, in part, upon the concentration of the dispersion, the actual thermoplastic resin and the effect desired. Usually, this is on the order of about 0.01 to about 2 percent by weight, preferably about 0.02 to about 1 percent by weight, based on the weight of the resin.

Whereas the exact scope of the instant invention is set forth in the appended claim:, the following specific examples illustrate certain aspects of the present invention and more particularly, point out methods of evaluating the same. All parts and percentages are by weight unless otherwise specified. Particle size in microns, as reported herein, was determined using a MICROTRAC® particle size analyzer.

## Definitions

The following designations used in the Examples and elsewhere herein have the following meaning:

Oxidative Induction Time (OIT) was determined at a temperature of 200 °C under an oxygen feed of 50 ml per minute. The test is a determination of oxidative degradation stability. Average oxidative induction time is reported in minutes and described in chapter 9 of the following publication:

H. E. Bair
Thermal Analysis of Additives in Polymers
Thermal Characterization of Polymer Materials
E. A. Turi Ed.
Academic Press, 1981
New York

Yellowness Index (YI) was determined in accordance with ASTM D-1925-70, before and after aging at 80 °C for a certain time period. A Pacific Scientific Colorgard System/OS instrument was used in determination of the color.

SPAN 80: Sorbitan monooleate supplied by Imperial Chemical Industries Ltd.

SPAN 20: Sorbitan monolaurate supplied by Imperial Chemical Industries Ltd.

Ethanox® 330:
(1,3,5-trimethyl)-2,4,6-tri(3,5-di-tert-butyl-4 hydroxybenzyl)benzene, manufactured by Ethyl Corporation.
Irganox® 1010:
(tetrakis [methylene-3(3',5'-di-tert-butyl-4' hydroxyphenyl)propionate] methane, marketed by Ciba-Geigy Corporation.
PA-1: UCARSIL® PA-1 is a polyether silicone processing aid from Union Carbide Chemicals and Plastics Company Inc., Danbury, CT.
Vanox 1001: A substituted aromatic amine sold by R. T. Vanderbilt Company, Inc. as a general purpose antioxidant.
Cynox 711: Ditridecylthiodiproprionate made by American Cyanamid Company.
Weston 399B: Tris(nonylphenyl)phosphite available from Borg-Warner Chemical Co.
1 MI LLDPE: Copolymer of ethylene/1-butene having a melt index of 1 and density of 918 Kg/$m^3$ g - gram or grams.

Example 1

30g Ethanox® 330 (50% by weight of the particles had a particle size less than 75.5 microns) 30g micronized Ethanox® 330 (50% by weight of the particles had a particle size less than 3.9 microns), and 60g SPAN 80 were blended in a Cowles mixer at 1500 RPM for 5 minutes. The resulting dispersion was sufficiently stable to withstand 4 hours of centrifugation at a force of 1400G's.

Example 2

40g micronized Irganox® 1010 (50% by weight of the particles had a particle size less than about 3.2 microns) 60g of Span 80 were blended in a Cowles mixer at 1500 RPM for 5 minutes. The resulting dispersion was sufficiently stable to withstand 1 hour of centrifugation at a force of 1400G's.

Example 3

40g micronized Irganox 1010 (50% by weight of the particles had a particle size less than about 3.2 microns) and 60g of Span 20 were blended in a Cowles mixer at 1500 RPM for 5 minutes. The resulting dispersion was sufficiently stable to withstand 1 hour of centrifugation at a force of 1400G's.

Example 4

1g PA-1 and 1g Weston 399B were mixed. They were not miscile.

Example 5

Example 4 was repeated except that 2g of Span 20 was added. The solution was mixed and was miscible. This Example demonstrates the improved miscibility of liquids when Span 20 was added to the formulation.

Example 6

1g PA-1 and 1g SPAN 80 were mixed. They formed a miscible solution.

Example 7

1g Weston 399B and 1g SPAN 80 were mixed. They formed a miscible solution.

Example 8

1g glyceryl trioleate and 1g Weston 399B were mixed. They formed a miscible solution.

Example 9

1g Cyanox 711, 1g Vanox 1001 and 1g glyceryl trioleate were mixed. They formed a miscible solution.

Example 10

1g Vanox 1001, 1g mineral oil and 1g glycerol trioleate were mixed. They formed a miscible solution.

Example 11

72g micronized Ethanox 330 (50% by weight of the particles had a particle size less than about 3.9 microns) and 60g glyceryl trioleate were blended in a Cowles mixer at 1500 RPM for 5 minutes. The resulting dispersion was sufficiently stable to withstand 4 hours of centrifugation at a force of 1400G's.

Example 12

40g PA-1 and 40g SPAN 80 were mixed. They formed a miscible solution. To the above solution 40g micronized Ethanox 330 (50% by weight of the particles had a particle size less than about 3.9 microns) and 40g unground Ethanox 330 (50% by weight of the particles had a particle size less than about 75.5 microns) were blended in a Cowles mixer at 1500 RPM for 5 minutes. The resulting dispersion was sufficiently stable to withstand 4 hours of centrifugation at a force of 1400G's.

Example 13

Respective compositions, the formulations of which are described in Table 1 hereunder, were compounded in a Henschel mixer and extruded at 218°C through a strand die fitted to a Brabender extruder and pelletized.

Table 1

| Formulation % | YI 1day 80°C | YI 7days 80°C | OIT(min) |
|---|---|---|---|
| 99.95% LLDPE<br>0.05% Micronized<br>Irganox 1010 | 20 | 20 | 28.2 |
| 99.85% LLDPE<br>0.05% Micronized<br>Irganox 1010<br>0.1% SPAN 80<br>(The Irganox 1010 and SPAN 80 were added to the LLDPE as a dispersion. The dispersions was formed by blending the components together in a Cowles mixer at 1500 rpm for 5 minutes.) | 12 | 12 | 30.3 |

The above results demonstrate the improvement in the stabilization of the polymer when the dispersion of the invention was employed.

## Claims

1. A stable dispersion wherein the discrete phase comprises a polymer stabilizer and the continuous phase comprises a normally liquid fatty acid ester of a polyhydric organic compound or mixture.

2. A stable dispersion as defined in claim 1 wherein the polymer stabilizer comprises solid particles, at least about 95% by weight of the solid particles having a particle size of less than 150 microns and at least 20 % by weight of said particles having a particle size of less than 20 microns.

3. A stable dispersion as defined in one or more of the claims 1 to 2 wherein the continuous phase comprises a fatty acid ester of a polyhydric alcohol having from three to six hydroxyl groups.

4. A stable dispersion as defined in one or more of the claims 1 to 3 wherein the continuous phase comprises sorbitan monooleate, sorbitan monolaurate, glyceril trioleate or mixtures thereof.

5. A method for combining a polymer stabilizer and a polymer which method comprises providing to the polymer a stable dispersion wherein the discrete phase comprises a polymer stabilizer and the continuous phase comprises a normally liquid fatty acid ester of a polyhydrid organic compound.

6. The method of claim 5 wherein the discrete phase comprises solid particles having at least about 95% by weight solid particles having a particle size of less than 150 microns and at least 20% by weight of said particles having a particle size of less than 20 microns.

7. The method of one or more of the claims 5 to 6 wherein the stable dispersion is added to the polymer while the polymer is in the form of a solid particle.

8. The method of one or more of the claims 5 to 7 wherein the sorbitan or glyceryl ester is sorbitan monooleate, sorbitan monolaurate, sorbitan trioleate, glyceryl monooletate and mixtures thereof.

9. The method of one or more of the claims 5 to 8 wherein the continuous phase comprises a normally liquid fatty acid ester of a polyhydric compound and an organomodified silicone.

10. The method of one or more of the claims 5 to 9 wherein the continuous phase comprises a normally liquid fatty acid ester of a polyhydric organic compound and a polyether silicone.

European Patent Office

# EUROPEAN SEARCH REPORT

Application Number

EP 93 10 5292

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 413 647 (EASTMAN KODAK COMPANY)<br>* page 6, line 14 - line 42 *<br>* claims 1,4,7-8 *<br>--- | 1,3-5 | C08J3/20<br>C08K5/10 |
| A | DATABASE WPI<br>Derwent Publications Ltd., London, GB;<br>AN 85-199538<br>& JP-A-60 124 628 (NIPPON ZEON KK) 3 July 1985<br>* abstract *<br>--- | 1-2,5 | |
| A | EP-A-0 200 684 (CIBA-GEIGY)<br>* page 14; example 5a *<br>--- | 1,3-5 | |
| A | US-A-3 932 634 (JOSEPH A. KARDYS)<br>* column 4; example 2 *<br>* claim 1 *<br>--- | 1,3-4 | |
| A | EP-A-0 455 370 (METACOL LIMITED)<br>* page 3, line 7 - line 9 *<br>* page 3, line 39 - line 43 *<br>* page 3, line 55 - line 56 *<br>* claims 1-4,18 *<br>----- | 1,3-5 | TECHNICAL FIELDS SEARCHED (Int. Cl.5 )<br>C08J<br>C08K |

The present search report has been drawn up for all claims

| Place of search | Date of completion of the search | Examiner |
|---|---|---|
| THE HAGUE | 15 JULY 1993 | SIEMENS T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)